# EUROPÄISCHE PATENTSCHRIFT

(11) **EP 2 101 124 B1**
(45) Veröffentlichungstag und Bekanntmachung des Hinweises auf die Patenterteilung: **25.03.2015**
(21) Anmeldenummer: 08014617.8
(22) Anmeldetag: 18.08.2008
(51) Int. Cl.: F24H 9/20, G05D 23/00

(54) **Verfahren zum Steuern eines elektrischen Durchlauferhitzers und elektrischer Durchlauferhitzer**
Method for operating an electric instantaneous water heater and electric instantaneous water
Procédé de commande d'un chauffe-eau instantané électrique et chauffe-eau instantané électrique

(30) Priorität: 12.03.2008 DE 102008013946
(43) Veröffentlichungstag der Anmeldung: 16.09.2009
(73) Patentinhaber: Stiebel Eltron GmbH & Co. KG, 37603 Holzminden (DE)
(72) Erfinder: Diederich, Olaf, 37671 Höxter (DE); Lüttenberg, Josef, 45529 Hattingen (DE); Grünig, Lutz, 37603 Holzminden (DE)

(56) Entgegenhaltungen:
- DE-A1-102004 021 432
- GB-A- 2 184 526
- US-A- 4 713 525

## Beschreibung

Die vorliegende Erfindung betrifft ein Verfahren zum Steuern eines elektrischen Durchlauferhitzers sowie einen elektrischen Durchlauferhitzer.

DE 10 2004 021 432 A1 beschreibt ein verbessertes Verfahren zur Steuerung der Wassertemperatur eines Warmwasserbereiters, um einen verbesserter Verbrühungsschutz zu erreichen. Somit wird ein Stellglied vorgesehen, mit dem sich die an einer Zapfstelle auftretende Wassertemperatur begrenzen läßt.

DE 196 52 130 A1 beschreibt einen elektrischen Durchlauferhitzer, der ein Bedienteil mit einer Taste aufweist, welche bei Betätigung die Wasserdurchflussmenge des Durchlauferhitzers auf einen vorgegebenen Wert begrenzt.

Dies erfolgt insbesondere in Zeiten knapper Ressourcen und hoher Energiepreise, um die Durchflussmenge des Wassers zu begrenzen und um somit Wasser zu sparen.

Es ist eine Aufgabe der vorliegenden Erfindung, ein Verfahren zum Steuern eines Durchlauferhitzers vorzusehen, mit welchem eine Bereitstellung von warmem Wasser kostengünstig und energieeffizient erfolgen kann.

Diese Aufgabe wird durch ein Verfahren gemäß Anspruch 1 gelöst.

Somit wird ein Verfahren zum Steuern eines elektrischen Durchlauferhitzers vorgesehen. Eine erste Betriebsart mit einer reduzierten Auslauftemperatur und einer reduzierten Durchflussmenge wird bei Betätigung einer einzigen Taste eines Bedienelementes des elektrischen Durchlauferhitzers aktiviert.

Gemäß einem Aspekt der vorliegenden Erfindung wird die erste Betriebsart nach einer bestimmten Zeit oder nach einer Anzahl von Zapfungen wieder deaktiviert.

Gemäß einem weiteren Aspekt der vorliegenden Erfindung wird die zweite Betriebsart durch Betätigung eine weiteren Taste des Bedienelementes aktiviert. Es wird von der zweiten auf die erste Betriebsart nach einer vorbestimmen Zeitdauer oder nach einer Anzahl von Zapfungen umgeschaltet.

Die Erfindung betrifft ebenfalls einen elektrischen Durchlauferhitzer mit einem Bedienelement und einer Steuereinheit zum Steuern des elektrischen Durchlauferhitzers in einer ersten Betriebsart, wobei sowohl die Auslauftemperatur als auch die Durchflussmenge bei Betätigung des Bedienelementes reduziert wird.

Die Erfindung betrifft den Gedanken, mittels einer Taste sowohl die Solltemperatur des elektrischen Durchlauferhitzers als auch die Durchflussmenge zu reduzieren. Somit kann erreicht werden, dass sowohl die Temperatur als auch die Durchflussmenge begrenzt wird, so dass beispielsweise ein Duschen weiterhin möglich ist, auch wenn dies mit einer reduzierten Durchflussmenge erfolgen muss. Optional kann einer Betriebsart mit einer Begrenzung der Temperatur und der Durchflussmenge eine Priorität zugeordnet werden. Diese Betriebsart mit Priorität kann beispielsweise durch andere Komforteinstellungen mit einer anderen Priorität, wie z. B. eine Wunschtemperatur oder eine gewünschte Durchflussmenge, deaktiviert werden. Wenn die weitere Priorität aktiviert wird, dann wird die Reduzierung der Solltemperatur und der Durchflussmenge deaktiviert. Die angeführte Priorität kann auch darin bestehen, dass für eine Dauer der nächsten Zapfung oder für eine bestimmte Zeit oder eine Kombination aus den beiden oder für eine bestimmte Anzahl von Folgezapfungen die Reduzierung der Solltemperatur und der Durchflussmenge ausgeschaltet bzw. deaktiviert wird. Danach kann die eingestellte Reduzierung der Solltemperatur und der Durchflussmenge wieder aktiviert werden.

Gemäß einem weiteren Gedanken der Erfindung wird der Durchlauferhitzer mit einer Betriebsart B_{N} für Normalbetrieb betrieben, in dem beliebige Termperaturen und/oder Durchflussmengen eingestellt werden. Ausgehend davon kann wenigstens eine weitere Betriebsart B₁ oder B₃, in der eine Kombination eines Temperaturwertes mit einem Durchflusswert eingestellt wird, aktiviert werden. Ausgehend von einer der Betriebsarten B₁ oder B₃ wird mit einer bewussten Änderung des Temperaturwertes und/oder des Durchflusswertes eine Betriebsart B₂ aktiv, in der die eingestellten Temperaturwerte und/oder Durchflusswerte der Betriebsart B₁ und/oder B₃ geändert sind.

Gemäß einem weiteren Aspekt der Erfindung erfolgt aus der Betriebsart B₂ eine Reaktivierung der vorher gewählten Kombination entsprechend der Betriebsart B₁ oder B₃, unter den Bedingungen einer Funktion B_{AUS}.

Die Funktion B_{AUS} beschreibt die Bedingungen, unter denen eine vorher gewählte Betriebsart B₁, B₂ oder B₃ wieder reaktiviert wird, z.B. nach einer vorbestimmten Zeit, nach einer Anzahl von Zapfungen, einer vorbestimmten Wassermenge, der Temperatur, des Durchflusswertes durch eine Eingabe, oder einer Kombination der Zeit, der Anzahl von Zapfungen, der Wassermenge, der Temperatur, des Durchflusswertes und/oder der Eingabe.

Bei einem weiteren Ausführungsbeispiel eines Verfahrens zum Steuern eines Durchlauferhitzers erfolgt ausgehend von einer Betriebsart B_{N} für Normalbetrieb, in dem beliebige Temperaturen und/oder Durchflussmengen eingestellt werden, eine Änderung der Temperatur und/oder des Durchflusses in Abhängigkeit einer Korrektureingabe und/oder einer Korrekturfunktion. Hierbei wird der Durchlauferhitzer in vorteilhafter Weise mit einer voreingestellten Kombination aus Temperatur und Durchflussmenge ausgeliefert. Diese Voreinstellung kann ein mittlerer Durchfluss und eine mittlere Temperatur sein. Im weiteren Betrieb des Durchlauferhitzers wird abhängig von einer Korrekturfunktion, die in der Steuereinheit 500 gespeichert und programmierbar ist, nach einer vorbestimmten Zeit, nach einer Anzahl von Zapfungen, einer vorbestimmten Wassermenge, der Temperatur, des Durchflusswertes durch eine Eingabe, oder einer Kombination der Zeit, der Anzahl von Zapfungen, der Wassermenge, der Temperatur, des Durchflusswertes und/oder der Eingabe die Temperatur und/oder der Durchfluss oder die voreingestellte Kombination von Temperatur und Durchfluss geändert, insbesondere vermindert oder anders aufeinander abgestimmt. Die Verminderung der Temperatur und des Durchflusses kann in einem oder mehreren größeren oder kleineren Schritten erfolgen. Als Beispiel sei hier eine Änderung nach einer Anzahl von Zapfungen beschrieben. Ausgeliefert wird der Durchlauferhitzer in einem Ausführungsbeispiel mit einer Temperaturvorgabe von 40°C und einem Durchfluss von 10 l/min. Nach der Installation und Inbetriebnahme wird von einer Steuereinheit die Anzahl der Zapfungen registriert. Mit einem veränderbaren Wert wird die Anzahl der Zapfungen festgelegt, nach denen eine Änderung des Auslieferungszustandes oder einer eingestellten Kombination von Temperatur und Durchfluss des Durchlauferhitzers geändert wird. Vorteilhaft ist es, wenn mit der Werks-Eingabe eine Reduzierung von Temperatur und/oder Durchfluss vorgegeben ist, um einen möglichst effizienten Betrieb des Durchlauferhitzers zu ermöglichen. In einem anderen Ausführungsbeispiel kann vom Benutzer eingegeben werden, ob eine Reduzierung oder Erhöhung von Temperatur und Durchfluss in Abhängigkeit der Korrekturfunktion erfolgen soll. Im hier beschriebenen Beispiel erfolgt nach 20 Zapfungen eine Reduzierung der Temperatur um 2°C und/oder eine Reduzierung des Durchflusses auf 9 l/min. Vorteilhaft sind Änderungen der Temperatur um 0,5 - 5°C und/oder des Durchflusses um 0,5 - 5 l/min. Der Benutzer wird nun bei der oben beschriebenen Reduzierung von 40 auf 38°C sowie von 10 auf 9 l/min möglicherweise noch keinen Komfortverlust bemerken. Beim Duschen wird er aber nach einer weiteren Reduzierung um weitere 2°C auf 36°C und des Durchflusses auf 8 l/min nach weiteren 20 oder 40 Zapfungen eine Reduzierung des Komforts bemerken. In diesem Fall gibt der Benutzer am Durchlauferhitzer eine Eingabe "Komforterhöhung" ein, was durch eine Komforttaste, ein Bedienelement oder eine Eingabe erfolgt, wodurch am Durchlauferhitzer eine Kombination aus einer höheren Temperatur und/oder eines höheren Durchflusses eingestellt wird, z.B. die vorhergehende Kombination von 9 l/min und 38°C. Falls dies dem Benutzer immer noch nicht komfortabel genug ist, was er bei einer der nächsten Duschvorgänge bemerkt, kann er erneut die Komforttaste betätigen, und es erfolgt wiederum eine Erhöhung der Temperatur und/oder des Durchflusses, insbesondere auf eine der vorher eingestellten höheren Kombinationen. In der Steuerung des Durchlauferhitzers wird vorzugsweise in interaktiven Schritten eine optimale Einstellung der Temperatur und des Durchflusses unter ökonomischen, ökologischen und Komfort-Bedingungen erreicht. Insbesondere wird vermieden, dass ein Benutzer eine hohe Temperatur, z.B. 60° eingestellt hat und weitgehend Warmwasser mit nur ca. 37 - 40° zum Duschen benötigt, und diese Temperatur an einer Mischarmatur einstellt. Nachdem der oben beschriebene Integrationsprozess einmal durchgeführt wurde, wird in vorteilhafter Weise die Anzahl der Zapfungen, nach denen wieder eine Reduzierung erfolgt, erhöht, insbesondere verdoppelt oder um einen festen Wert erhöht. Somit wird die Korrekturfunktion dahingehend geändert, dass sich eine Änderung, insbesondere Reduzierung der Temperatur und oder des Durchflusses verzögert, indem beispielsweise die Anzahl der Zapfungen erhöht oder die Zeit verlängert wird. Gleiches gilt für die anderen Parameter die Korrekturfunktion.

Gemäß einem weiteren Aspekt der Erfindung erfolgt die Eingabe, dass der Benutzer einen höheren Komfort benötigt, entweder über eine Taste oder durch Eingabe einer höheren Temperatur und/oder eines höheren Durchflusses.

In einem anderen Ausführungsbeispiel ist die Korrekturfunktion invertiert und führt zu einer Erhöhung der Temperatur und/oder des Durchflusses nach einem oder mehreren der vorgegebenen Parameter der Korrekturfunktion. Insbesondere ist der Durchlauferhitzer hier werkseitig auf einen sehr niedrigen Durchfluss und eine sehr niedrige Temperatur eingestellt, und der Benutzer bestätigt nach Ansteigen der Temperatur und/oder des Durchflusses durch Betätigen einer Taste die von ihm gewünschte Temperatur- und Durchfluss-Kombination.

In einem Ausführungsbeispiel der Erfindung erfolgt nach der Eingabe für Komforterhöhung eine Abfrage des Benutzers, wie stark der Komfort verbessert werden soll oder auf welchen Wert die Temperatur und oder der Durchfluss geändert werden soll. Die Abfrage kann durch einen beliebigen Dialog über Sprache, Text am Display, Symbole oder Farbanzeigen erfolgen. So fragt der Durchlauferhitzer den Benutzer über Sprachausgabe und Sprachbefehle, auf welchen Wert er die Temperatur und/oder den Durchfluss setzen möchte. Dies kann natürlich auch über einen am Display angezeigten Text und eine Eingabe am Bedienelement erfolgen. Insbesondere der Sprachdialog ist durch eine Eingabe an Bedienfeld abschaltbar.In einem Ausführungsbeispiel der Erfindung erfolgt nach der Eingabe für Komfortänderung eine Abfrage des Benutzers, wie stark der Komfort verbessert werden soll oder auf welchen Wert die Temperatur und oder der Durchfluss geändert werden soll. Die Abfrage kann durch einen beliebigen Dialog über Sprache, Text am Display, Symbole oder Farbanzeigen erfolgen. So fragt der Durchlauferhitzer den Benutzer über Sprachausgabe und Sprachbefehle, auf welchen Wert er die Temperatur und/oder den Durchfluss setzen möchte. Dies kann natürlich auch über einen am Display angezeigten Text und eine Eingabe am Bedienelement erfolgen. Insbesondere der Sprachdialog ist durch eine Eingabe an Bedienfeld abschaltbar. Die Abfrage und der Dialog wird vom Durchlauferhitzer beim Zapfen, nach einer bestimmten Zeit oder nach Ende eines Zapfvorganges durchgeführt, z.B. nach einem Zapfvorgang mit der Abfrage: "Waren Sie mit dem Warmwasserkomfort zufrieden?". Die Abfrage erfolgt entweder auf dem Display, vorzugsweise bei blinkender oder besonders leuchtender Anzeige, durch ein Tonsignal, Musik oder durch eine Sprachausgabe des Gerätes. Der Benutzer wird somit vom Durchlauferhitzer abgefragt, ob er mit dem Warmwasserkomfort zufrieden ist. Gemäß einem Gedanken der Erfindung wird der Dialog nach einer Eingabe des Benutzers, in diesem Falle z.B. bei " Nein", weitergeführt oder, wenn der Benutzer "Ja" eingibt oder spricht, vorzugsweise beendet. Wenn der Benutzer mit dem Warmwasserkomfort nicht zufrieden ist, erfolgt in einem Ausführungsbeispiel der Erfindung eine weitere Abfrage des Benutzers, ob er einer Reduzierung von Temperatur und/oder Durchfluss zustimmt, die dann entweder vom Gerät selbsttätig durchgeführt wird oder durch Eingabe durch den Benutzer, indem er entsprechende Temperaturen oder Temperaturminderungen, gleiches gilt für den Durchfluss, eingibt. Diese Eingabe erfolgt in vorteilhafter Weise durch einen Sprachdialog:
Durchlauferhitzer: "Bitte geben Sie Wunschtemperatur an". Benutzer: "40°C" Durchlauferhitzer: "Ihre Wunschtemperatur von 40°C wurde eingestellt, wünschen sie weitere Änderungen?"
Dieser Dialog wird entsprechend für die Durchflussmenge geführt. Die obigen Texte sind nur Beispiele für die Abfrage. Bei Drücken der Komforttaste oder einer entsprechenden Eingabe am Durchlauferhitzer oder nach dessen Aufforderung können auch einfache Befehle eingegeben werden wie z.B.:
   Benutzer an Durchlauferhitzer: " Händewaschen", bedeutet, dass am Durchlauferhitzer eine Warmwassertemperatur von 30°C bei einem Durchfluss von 6 l/min oder ein ähnlicher ausreichender Wert für das Händewaschen eingestellt wird.
   Benutzer an Durchlauferhitzer: "Duschen", bedeutet, dass am Durchlauferhitzer eine Warmwassertemperatur von ca. 40°C eingestellt wird bei einem Durchfluss von 12 l/min.
   Benutzer an Durchlauferhitzer: " Komfortduschen", bedeutet, dass am Durchlauferhitzer eine Warmwassertemperatur von ca. 40°C eingestellt wird, bei einem maximal möglichen Durchfluss.
   Benutzer an Durchlauferhitzer: " Heißwasser", bedeutet, dass am Durchlauferhitzer eine Warmwassertemperatur von 55°C eingestellt wird, bei einem Durchfluss von 8 l/min.

Die oben genannten Kombinationen können ebenfalls vom Benutzer vorher definiert werden. Gemäß einem weiteren Ausführungsbeispiel kann der Benutzer selbst Kombinationen von Durchflussmenge und Temperatur zu einer entsprechenden Warmwasserfunktion definieren und eingeben. Diese genannten Funktionen können weiterhin geändert werden, insbesondere abweichend von einer Werks-Eingabe.
Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung eines elektrischen Durchlauferhitzers gemäß der Erfindung,
- Fig. 2: zeigt eine schematische Darstellung eines elektrischen Durchlauferhitzers mit verschiedenen Einstelltastern,
- Fig. 3: zeigt schematisch die Interaktion zwischen verschiedenen Bedienfunktionen.

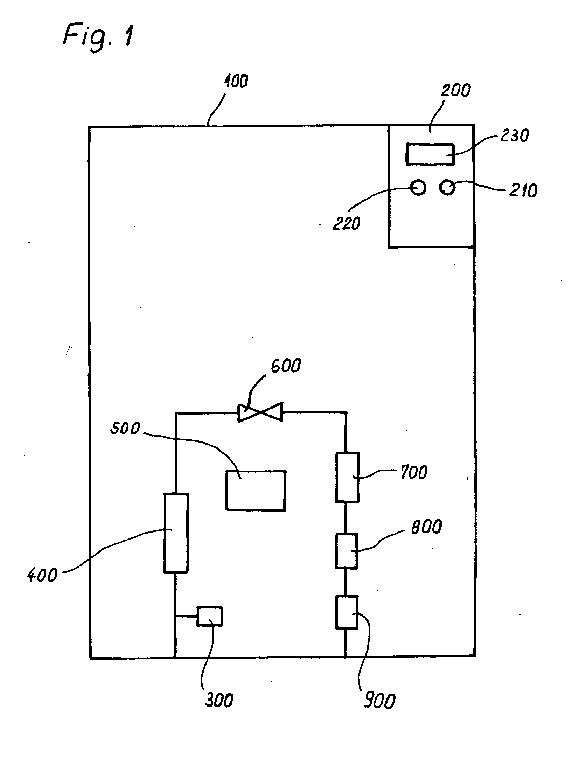

Fig. 1 zeigt eine schematische Darstellung eines elektrischen Durchlauferhitzers gemäß der Erfindung.

Der Durchlauferhitzer 100 weist ein Bedienelement 200 mit mindestens einem Taster 210 auf. Der Durchlauferhitzer 100 weist ferner einen Sensor 300 zum Messen der Ausgangstemperatur, eine elektrisch betriebene Heizstrecke 400, eine Steuereinheit 500, ein Ventil 600, eine Kühleinheit 700, eine Durchflussmengenbegrenzungseinheit 800 und einen weiteren Temperatursensor 900 auf. Des weiteren weist der Durchlauferhitzer einen Durchflussmengenmesser auf. Durch Betätigen der Taste 210 kann der elektrische Durchlauferhitzer 100 in einen ersten Betriebszustand versetzt werden, bei dem sowohl die Auslauftemperatur als auch die Durchflussmenge begrenzt wird. Hierbei ist insbesondere die Steuereinheit 500 sowohl mit dem Bedienelement 200 als auch mit der Durchflussbegrenzungseinheit 800 und mit der Heizstrecke 400 verbunden und steuert die Heizstrecke und die Durchflussbegrenzungseinheit 800 entsprechend, um sowohl die Auslauftemperatur als auch die Durchflussmenge zu begrenzen.

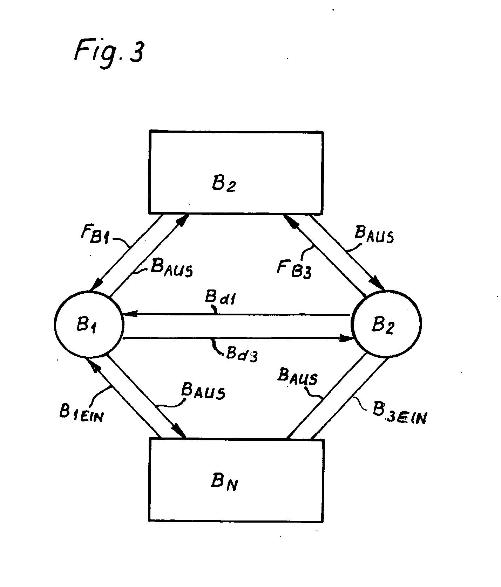

Der durch den Taster aktivierte (Aktivierung B_{1EIN}) erste Betriebszustand B₁ (Ökofunktion) kann automatisch entsprechend einer Funktion B_{AUS} nach vorbestimmten Werten oder Parametern, insbesondere einer vorbestimmten Zeit, nach einer Anzahl von Zapfungen, einer vorbestimmten Wassermenge, der Temperatur, des Durchflusswertes durch eine Eingabe, oder einer Kombination der Zeit, der Anzahl von Zapfungen, der Wassermenge, der Temperatur, des Durchflusswertes und/oder der Eingabe wieder deaktiviert werden, so dass der elektrische Durchlauferhitzer wieder zurück in den Normalbetrieb B_{N} springt. Alternativ dazu kann der elektrische Durchlauferhitzer in der ersten Betriebsart B₁ bleiben, wenn die Taste 210 aktiviert ist. Das Bedienelement 200 kann ebenfalls weitere Tasten 220 aufweisen, mittels welcher beispielsweise die Temperatur oder die Durchflussmenge erhöht werden kann (in Fig. 3 als F_{B1} bezeichnet) und der Durchlauferhitzer in einer Betriebsart B₂ betrieben wird. Auch hier findet die Funktion B_{AUS} Anwendung und der elektrische Durchlauferhitzer springt von einer zweiten Betriebsart B₂ (beispielsweise mit erhöhter Temperatur und/oder erhöhter Durchflussmenge) wieder in die erste Betriebsart B₁ (Ökoeinstellung mit reduzierter Temperatur oder reduzierter Durchflussmenge) zurück.

Das Bedienelement 200 kann ebenfalls als eine Fernbedienung ausgestaltet sein. Hierbei kann der Durchlauferhitzer bei Betätigung der Taste 210 in die erste Betriebsart B₁ umgeschaltet werden, d. h. sowohl die Auslauftemperatur als auch die Durchflussmenge wird begrenzt. Die erste Betriebsart B₁ des elektrischen Durchlauferhitzers kann nach einer bestimmten Zeit wieder deaktiviert werden oder andere aktivierte Betriebsarten B₁, B₂, B₃ oder B_{N} können nach einer bestimmten Zeit oder nach einer bestimmten Anzahl von Zapfvorgängen wieder deaktiviert werden, insbesondere entsprechend der Funktion B_{AUS}, so dass der elektrische Durchlauferhitzer wieder in der vorherigen, z.B. in der ersten Betriebsart (Ökoeinstellung) betrieben wird.

Alternativ dazu kann ebenfalls eine Fernstellmöglichkeit bzw. Fernstellaktivierung der ersten Betriebsart vorgesehen werden. Dies kann beispielsweise direkt an einer Zapfstelle wie beispielsweise in der Küche erfolgen, so dass, wenn eine Zapfstelle aktiviert wird, beispielsweise die erste Betriebsart (Ökoeinstellung, reduzierte Temperatur und reduzierte Durchflussmenge) deaktiviert wird und das Zapfen bei einer gewünschten höheren Temperatur und mit einer gewünschten höheren Durchflussmenge erfolgen kann. Nach einer bestimmten Zeitdauer oder nach einer bestimmten Anzahl von Zapfungen kann die erste Betriebsart wieder aktiviert werden. Durch die automatische Wiederherstellung bzw. Aktivierung der ersten Betriebsart können die gewünschten Energie- und Wassereinsparungen erreicht werden.

Gemäß einem weiteren Ausführungsbeispiel der Erfindung ist in oder an dem Bedienelement eine weitere Verstellmöglichkeit des Sollwertes für die Ausgangstemperatur in der ersten Betriebsart (mit reduzierter Temperatur und reduzierter Durchflussmenge) vorgesehen. Hierbei kann die Solltemperatur der ersten Betriebsart werkseitig eingestellt werden. Optional kann ein Benutzer des Haustechnikgerätes mittels des Bedienelementes die Solltemperatur gemäß seinen Wünschen einstellen. Entsprechend kann in oder an dem Bedienelement eine Einstellmöglichkeit für die Durchflussmenge in der ersten Betriebsart vorgesehen werden. Hierbei kann werkseitig ein Wert eingestellt werden, welcher jedoch mittels des Bedienelementes von einem Benutzer gemäß seinen eigenen Wünschen eingestellt werden kann.

Das Haustechnikgerät gemäß der Erfindung kann ein Display 230 zum Anzeigen der Solltemperatur, der lsttemperatur, der Betriebsart oder dergleichen aufweisen. Wenn beispielsweise die erste Betriebsart (mit reduzierter Temperatur und reduzierter Durchflussmenge) gewählt wird, dann kann die Solltemperatur oder die lsttemperatur auf dem Display 230 angezeigt werden. Entsprechendes kann auch für die Durchflussmenge gelten.

Obwohl oben angeführt worden ist, dass nach einer bestimmten Zeitdauer oder nach einer bestimmten Anzahl von Zapfungen von der ersten in die zweite Betriebsart oder von der zweiten in die erste Betriebsart umgeschaltet werden kann, kann ein derartiges Umschalten auch in Abhängigkeit einer Durchflussmenge erfolgen. Dies kann beispielsweise dann erfolgen, wenn der Anwender ein Wannenbad nehmen möchte und daher die Badewanne mit Warmwasser füllen muss. Hierbei kann in einer ersten Betriebsart die Temperatur und die Durchflussmenge dann reduziert werden, was zwar dazu führt, dass das Auffüllen der Badewanne länger dauert, aber dafür Energie eingespart wird.

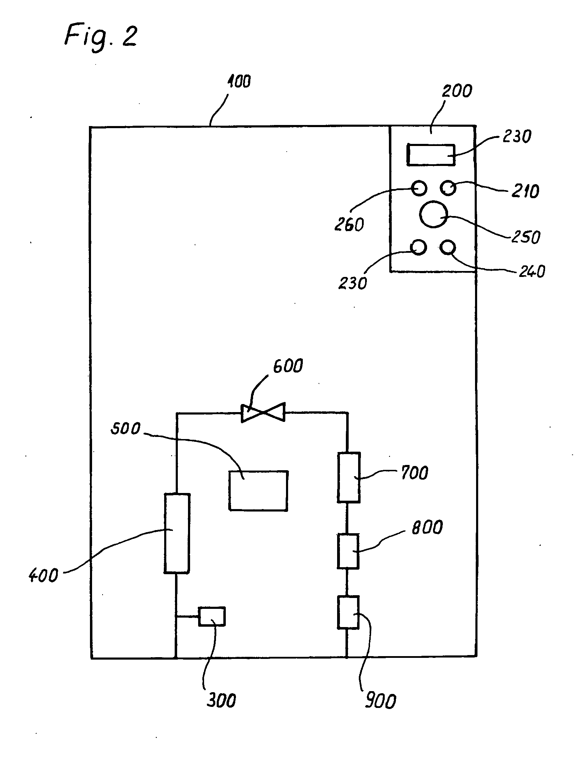

Der in Fig. 2 schematisch dargestellte Durchlauferhitzer weist speziell einen Taster 230 für die Temperatur und einen Taster 240 für den Durchfluss auf. Nach Betätigung des Tasters 230 oder 240 kann mit einem Dreheinsteller 250 eine Werteinstellung der Temperatur und/oder des Durchflusses erfolgen, je nach dem, ob die Taste 230 oder die Taste 240 vorher gedrückt wurde. Die Taste 210 ist für die bereits beschriebene Ökofunktion vorgesehen und die Taste 260 für eine Komfortfunktion. Alternativ sind die Taster 230 und 240 als Wipptaster ausgeführt, und es kann je nach Wippstellung der Wert erhöht oder vermindert werden.

In Fig. 3 ist die Interaktion zwischen den Betriebsfunktionen B_{N} für Normalbetrieb, B₁ für Ökofunktion, B₃ für erhöhten Komfortbetrieb und die modifizierte Betriebsfunktion B₂ für eine Modifizierung der Ökofunktion B₁ oder B₃ dargestellt. Ausgehend vom Normalbetrieb B_{N}, in dem eine beliebige Temperatur und ein beliebiger Durchfluss, soweit diese vom Gerät geliefert werden können, eingestellt wird, kann für den ökologischen und ökonomischen Betrieb des Durchlauferhitzers die Ökofunktion B₁ durch Tastendruck, Sprach- oder Textdialog oder andere Eingaben, wie z.B. über einen Touchscreen aktiviert werden, was dem Schritt B_{1EIN} entspricht. Gemäß der bereits beschriebenen Funktion B_{AUS} wird der Durchlauferhitzer wieder auf den Normalbetrieb B_{N} zurückgeschaltet. Die Betriebsfunktion B_{AUS} kann ein- oder ausgeschaltet werden, d.h. dass der Benutzer entscheiden kann, ob der Durchlauferhitzer nach Wahl der Ökofunktion in diesem Betrieb bleiben soll oder entsprechend der vorgegebenen Kriterien der Funktion B_{AUS} wieder in den Normalbetrieb zurückschaltet. Ausgehend von der Ökofunktion B₁ kann der Benutzer nach Bedarf die modifizierte Betriebsfunktion B₂ aktivieren.

Hierbei wird vom Benutzer eine geänderte Temperatur oder ein geänderter Durchfluss oder eine Kombination aus einem anderen Durchfluss und einer anderen Temperatur eingegeben. Mit dieser Funktion wird der Durchlauferhitzer insbesondere vorübergehend mit einer geänderten Temperatur oder einem geänderten Durchfluss betrieben. In der Ökofunktion wird der Durchfluss vorzugsweise mit einer Temperatur von etwa 40°C und einem Durchfluss von ca. 8 l/min betrieben. Für den Fall, dass beispielsweise in der Küche 60° warmes Wasser bei einem großen Durchfluss benötigt wird, kann der Benutzer die gewünschte Temperatur und/oder den gewünschten Durchfluss einstellen. Gemäß der Funktion B_{AUS} schaltet der Durchlauferhitzer wieder in die Ökofunktion zurück.

Ähnlich verhält es sich beim Aktivieren der Komfortfunktion, in der bei einer gewünschten hohen Temperaturen oder einem gewünschten Durchfluss Warmwasser geliefert wird. Der Benutzer konfiguriert die Ökofunktion oder Komfortfunktion, falls ihm die Werkseinstellung nicht gefällt. Er stellt somit im Vorfeld Temperatur und Durchflusswerte für die Ökofunktion und/oder für die Komfortfunktion ein. Beim Drücken der Komfortfunktion (dargestellt als B_{3EIN}) wird diese aktiviert und kann - je nach dem, ob die Funktion B_{AUS} für die Funktion aktiviert ist oder nicht - verbleiben oder wieder in die Funktion B_{N} oder B₁ zurückspringen. Weiterhin kann zwischen der Komfortfunktion und der Ökofunktion direkt umgeschaltet werden (B_{d1}, B_{d3}, wobei auch hier ein Zurückspringen in die jeweils vorher gewählte Funktion gemäß der Funktion B_{AUS} erfolgen kann (nicht dargestellt). In Fig. 3 ist der Rücksprung zwischen den Funktionen jeweils mit B_{AUS} bezeichnet.

Gemäß einem weiteren Ausführungsbeispiel werden individuelle Rücksprung-Funktionen, bezogen auf die jeweilige Betriebsfunktion B₁, B₂, B₃ oder B_{N}, eingegeben, eingestellt, gespeichert und je nach Bedarf ein- oder ausgeschaltet. Damit soll gewährleistet sein, dass der Rücksprung aus bestimmten Funktionen wunschgemäß z.B. schnell oder langsam erfolgt (in Fig. 3 als F_{B1} bezeichnet).

Bei einem differenzierten Betrieb gibt es verschiedene Funktionen B_{AUS}, insbesondere für den Rücksprung aus der Funktion B₂ zurück in die Ökofunktion oder in die Komfortfunktion ist jeweils eine spezielle Funktion B_{AUS} B₂ gespeichert.

Hiermit soll insbesondere ein einmaliges, kurzzeitiges oder außergewöhnliches Zapfen von hohen Temperaturen und einem hohen Durchfluss schnell wieder rückgängig gemacht werden, während der Rücksprung aus der Funktion B₁ in den Normalbetrieb B_{N} vorzugsweise mit größeren Werten der Parameter, also z.B. länger, nach einer größeren Anzahl von Zapfungen oder anderen Parametern erfolgen soll.

Gemäß einem weiteren Aspekt der Erfindung erfolgt ein beliebiges Umschalten zwischen den Funktionen B_{N,}, B₁,B₂ und B₃, also auch zwischen B_{N} und B_{2,} und die einzelnen Funktionen sind vorteilhaft beliebig einstellbar oder programmierbar sowie ein- und ausschaltbar, auch B_{AUS} und die Korrekturfunktion.

## Patentansprüche

1. Verfahren zum Steuern eines elektrischen Durchlauferhitzers, mit den Schritten Aktivierung einer ersten Betriebsart durch Betätigung einer einzigen Taste eines Bedienelementes, wobei in der ersten Betriebsart eine Auslauftemperatur und eine Durchflussmenge reduziert sind.

2. Verfahren nach Anspruch 1,
wobei die erste Betriebsart nach einer vorbestimmten Zeitdauer, nach einer vorbestimmten Durchflussmenge und/oder nach einer Anzahl von Zapfungen deaktiviert wird.

3. Verfahren nach Anspruch 1,
wobei eine zweite Betriebsart durch Betätigen einer weiteren Taste des Bedienelementes aktiviert wird, wobei von der zweiten auf die erste Betriebsart nach einer vorbestimmen Zeitdauer, nach einer vorbestimmten Durchflussmenge oder nach einer Anzahl von Zapfungen umgeschaltet wird.

4. Verfahren nach einem der Ansprüche 1 bis 4,
wobei eine Solltemperatur und/oder eine Solldurchflussmenge für die erste Betriebsart einstellbar ist.

5. Elektrischer Durchlauferhitzer,
mit einem Bedienelement (200), und einer Steuereinheit (500), welche dazu ausgestaltet ist, sowohl die Auslauftemperatur als auch die Durchflussmenge bei Betätigung einer einzigen Taste eines Bedienelementes (200) zu reduzieren.

6. Verfahren zum Steuern eines Durchlauferhitzers nach Anspruch 1, mit einer Betriebsart für Normalbetrieb, in dem beliebige Temperaturen und/oder Durchflussmengen eingestellt werden,
mit den Schritten Aktivierung wenigstens einer weiteren Betriebsart B₁ oder B₃, in der eine Kombination eines Temperaturwertes mit einem Durchflusswert eingestellt wird, mit einer zumindest vorübergehenden Deaktivierung des eingestellten Temperaturwertes und/oder des Durchflusswertes der Betriebsart B₁ und/oder B₃ durch die Eingabe einer Änderung des Temperaturwertes oder des Durchflusswertes in eine Betriebsart B₂.

7. Verfahren nach Anspruch 6,
enthaltend den Verfahrensschritt einer Reaktivierung der vorher gewählten Kombination der Betriebsart B₁ oder B₃, unter den Bedingungen einer Funktion B_{AUS}, wobei die Funktion B_{AUS} eine Reaktivierung der Betriebsart B₁ oder B₂ nach vorbestimmten Werten oder Parametern, insbesondere einer vorbestimmten Zeit, einer Anzahl von Zapfungen, einer vorbestimmten Wassermenge, der Temperatur, des Durchflusswertes durch eine Eingabe oder einer Kombination der Zeit, der Anzahl von Zapfungen, der Wassermenge, der Temperatur, des Durchflusswertes und/oder der Eingabe ist.

8. Verfahren zum Steuern eines Durchlauferhitzers nach Anspruch 1, mit einer Betriebsart B_{N} für Normalbetrieb, in dem beliebige Temperaturen und/oder Durchflussmengen eingestellt werden,
enthaltend den Verfahrensschritt der Änderung der Temperatur und/oder des Durchflusses in Abhängigkeit einer Korrekturfunktion B_{KORR}.

9. Verfahren nach Anspruch 8,
**dadurch gekennzeichnet, dass** durch eine Eingabe am Durchlauferhitzer, insbesondere durch Drücken einer Taste, die Änderung der Temperatur und des Durchflusses rückgängig gemacht wird oder ein vorheriger Wert der Temperatur und oder des Durchflusses wieder eingestellt wird, insbesondere zur Erhöhung des Komforts die Temperatur und/oder der Durchfluss um jeweils vorgegebene Werte erhöht wird.

10. Verfahren zum Steuern eines Durchlauferhitzers nach Anspruch 1,
wobei durch Drücken einer Taste am Durchlauferhitzer eine Abfrage des Benutzers über die gewünschte Temperatur und/oder den gewünschten Durchfluss durch einen Dialog zwischen Durchlauferhitzer und Benutzer erfolgt.

## Claims

1. Process for controlling an electric continuous-flow water heater with the steps activation of a first operating mode by pressing a single button of a control element, with an outflow temperature and flow rate being reduced in this first operating mode.

2. Process as per claim 1,
where the first operating mode is deactivated after a pre-defined period of time, flow volume and/or number of tappings.

3. Process as per claim 1,
where a second operating mode is activated by pressing another button on the control element, with the system reverting to the first operating mode from the second operating mode after a pre-defined period of time, flow volume and/or number of tappings.

4. Process as per one of the claims 1 to 4,
where a desired temperature and/or flow volume can be set for the first operating mode.

5. Electric continuous-flow water heater,
with a control element (200) and a control unit (500) designed to reduce the outflow temperature as well as flow volume by pushing a single button on the control element (200).

6. Process for controlling a continuous-flow water heater as per claim 1, with an operating mode for normal operation where freely selectable temperatures and/or flow volumes are set, with the steps activation of at least one further operating mode B₁ or B₃ where a combination of a temperature value and a flow volume value is set, with an at least temporary deactivation of the set temperature value and/or flow volume value of operating mode B₁ and/or B₃ by entering a change of the temperature value or flow volume value in an operating mode B₂.

7. Process as per claim 6,
including the process step of reactivating the previously selected combination of operating mode B₁ or B₃ under the conditions of a function B_{OFF}, where the function B_{OFF} is a reactivation of operating mode B₁ or B₂ based on pre-defined values or parameters, in particular a pre-defined period of time, number of tappings, pre-defined water volume, temperature, flow volume by way of an input or combination of the time, number of tappings, temperature, flow volume and/or the input.

8. Process for controlling a continuous-flow water heater as per claim 1, with an operating mode B_{N} for normal operation where freely selectable temperatures and/or flow volumes are set,
including the process step of changing the temperature and/or flow volume depending on a correction function B_{CORR}.

9. Process as per claim 8,
**characterized by** the fact that an input at the continuous-flow water heater, in particular by pushing a button, will reverse the change of the temperature and flow volume or reset it to a previous temperature and/or flow volume, in particular increasing the temperature and/or flow volume by respective pre-defined values to raise the level of comfort.

10. Process for controlling a continuous-flow water heater as per claim 1,
where the push of a button at the water heater will cause the user to be queried about the desired temperature and/or desired flow volume by means of a dialogue between the continuous-flow water heater and user.

## Revendications

1. Procédé de contrôle d'un chauffe-eau électrique instantané comprenant les étapes d'activation d'un premier mode d'opération en actionnant le bouton unique d'un élément de commande, **caractérisé en ce que**, dans le premier mode d'opération, la température de sortie et le débit sont réduits.

2. Procédé selon la revendication 1,
**caractérisé en ce que** le premier mode d'opération est désactivé après une période de temps prédéterminée, après un débit prédéterminé et/ou après un certain nombre de tirages.

3. Procédé selon la revendication 1,
**caractérisé en ce qu'**un second mode d'opération est activé en actionnant un autre bouton de l'élément de commande, **caractérisé en ce que** le mode d'opération bascule du second au premier après une période de temps prédéterminée, après un débit prédéterminé et/ou après un certain nombre de tirages.

4. Procédé selon l'une des revendications 1 à 4,
**caractérisé en ce qu'**une température de consigne et/ou un débit de consigne sont paramétrables pour le premier mode d'opération.

5. Chauffe-eau électrique instantané
équipé d'un élément de commande (200) et d'une unité de contrôle (500) conçue pour réduire la température de sortie ainsi que le débit en actionnant le bouton unique d'un élément de commande (200).

6. Procédé de contrôle d'un chauffe-eau instantané selon la revendication 1, **caractérisé par** un mode d'opération pour le fonctionnement normal dans lequel les températures et/ou les débits souhaités sont paramétrés,
**caractérisé par** les étapes d'activation d'au moins un mode d'opération supplémentaire B₁ ou B₃ dans lequel est paramétrée la combinaison d'une valeur de température et d'une valeur de débit, **caractérisé par** une désactivation au moins temporaire de la valeur de température et/ou de la valeur de débit paramétrées du mode d'opération B₁ et/ou B₃ par saisie d'une modification de la valeur de température ou de la valeur de déit dans un mode d'opération B₂.

7. Procédé selon la revendication 6,
comprenant une étape de réactivation de la combinaison précédemment choisie du mode d'opération B₁ ou B₃, sous la condition d'une fonction B_{OFF}, **caractérisé en ce qu'**une fonction B_{OFF} déclenche une réactivation du mode d'opération B₁ ou B₂ selon des valeurs ou paramètres prédéterminés, en particulier selon une durée prédéterminée, un certain nombre de tirages, une quantité d'eau prédéterminée, la température, la valeur de débit saisis ou selon une combinaison de la durée, du nombre de tirages, de la quantité d'eau, de la température, de la valeur de débit et/ou de la saisie.

8. Procédé de contrôle d'un chauffe-eau instantané selon la revendication 1, **caractérisé par** un mode d'opération B_{N} pour le fonctionnement normal dans lequel les températures et/ou les débits souhaités sont paramétrés,
comprenant l'étape de modification de la température et/ou du débit en fonction d'une fonction de correction B_{CORR}.

9. Procédé selon la revendication 8,
**caractérisé en ce que**, par saisie sur le chauffe-eau instantané, en particulier par pression d'un bouton, la modification de la température et du débit est annulée ou une ancienne valeur de température et/ou de débit est restaurée, en particulier, afin d'augmenter le confort, la température et/ou le débit sont augmentés à hauteur des valeurs prédéfinies.

10. Procédé de contrôle d'un chauffe-eau instantané selon la revendication 1,
**caractérisé en ce que**, par pression d'un bouton sur le chauffe-eau instantané, une requête de l'utilisateur relative à la température souhaitée et/ou au débit souhaité a lieu par le biais d'un dialogue entre le chauffe-eau instantané et l'utilisateur.
